# EUROPEAN PATENT SPECIFICATION

(11) **EP 3 626 430 B1**
(45) Date of publication and mention of the grant of the patent: **24.01.2024**
(21) Application number: 18801508.5
(22) Date of filing: 11.04.2018
(51) Int. Cl.: B29C 64/124, G03C 1/73, B41M 5/327, B41M 5/34, B41M 5/333, B41M 5/323, B33Y 30/00, B33Y 80/00, B33Y 40/00, B29C 64/291, B29C 64/277, B29C 64/268, B29C 64/194, B41M 5/46, B41M 5/40, B41M 5/28, B33Y 70/00, B33Y 10/00, B41M 3/06

(54) **PRODUCTION METHOD FOR THREE-DIMENSIONAL STRUCTURE**
HERSTELLUNGSVERFAHREN FÜR DREIDIMENSIONALE STRUKTUR
MÉTHODE DE PRODUCTION POUR STRUCTURE TRIDIMENSIONNELLE

(30) Priority: 19.05.2017 JP 2017099627
(43) Date of publication of application: 25.03.2020
(73) Proprietor: Sony Group Corporation, Tokyo 108-0075 (JP)
(72) Inventor: SHUTO, Aya, Tokyo 108-0075 (JP); KURIHARA, Kenichi, Tokyo 108-0075 (JP); KIHARA, Nobuhiro, Tokyo 108-0075 (JP); KAJIO, Yusuke, Tokyo 108-0075 (JP); WATANABE, Tomomasa, Tokyo 108-0075 (JP)
(74) Representative: D Young & Co LLP
(86) International application number: PCT/JP2018/015203
(87) International publication number: WO 2018/211870

(56) References cited:
- WO-A1-95/01257
- WO-A1-2016/152088
- JP-A- H08 512 001
- JP-A- 2002 001 828
- JP-A- 2004 249 544
- JP-A- 2004 249 544
- JP-A- 2006 088 645
- JP-A- 2006 088 645
- US-A- 5 677 107

## Description

### Technical Field

The present disclosure relates, for example, to a three-dimensional structure including a leuco dye and a method of manufacturing the three-dimensional structure.

### Background Art

In recent years, as technology for manufacturing a three-dimensional object having an optional three-dimensional shape, additive manufacturing technology for solidifying a fluid material on the basis of three-dimensional data has been developed, and the technology is generally known as 3D printer.

The 3D printer makes it possible to easily produce a three-dimensional shape having a free-form surface or a complicated structure, which is difficult to cut in a method of creating a three-dimensional object by machining. In addition, the 3D printer makes it possible to obtain a desired three-dimensional shape by fully automated processes without causing wear of necessary tools for machining, noise, cutting chips, etc. For example, PTL 1 discloses an optical modeling apparatus including a first light source, an operation device, a second light source, and a spatial light modulator. The first light source emits a light beam for drawing on a light curable resin. The operation device performs scanning over the light curable resin with the light beam emitted from the first light source. The second light source emits light that is applied to each fixed region on the light curable resin. The spatial light modulator spatially modulates the light emitted from the second light source to perform one-shot exposure on a predetermined region of the light curable resin.

### Citation List

### Patent Literature

PTL 1: Japanese Unexamined Patent Application Publication No. 2008-155480
US 5677107 describes a method for producing a three-dimensional object having selected elements which are colored differently than other elements of the object comprising the steps of: (a) providing a film of a photohardenable composition containing a photoresponsive agent; (b) irradiating the film in a cross-sectional pattern of the object to be formed; (c) selectively irradiating one or more portions of the cross-sectional pattern corresponding to the selected elements which are desired to be colored differently with radiation which activates the photoresponsive agent, the photoresponsive agent thereby producing color in or removing color from the selected irradiated portions of the cross-sectional pattern; (d) repeating the steps a, b and c to form successive adjacent cross-sectional patterns of the object; and (e) integrating the cross-sectional patterns together to provide the object.
WO 9501257 describes a method of forming a three-dimensional article having at least one selectively coloured zone, said method comprising the steps of: (1) subjecting successive layers of a liquid photopolymerisable resin composition containing a colour former, a developer and an infrared absorber, to a programmed beam of electromagnetic radiation of a wavelength outside the infrared region of the spectrum thereby effecting polymerisation of the photopolymerisable resin composition to form successive layers of solid substantially polymerised resin composition and wherein adjacent layers become cohesively integrated as they are formed such that they define the structure of the three-dimensional article, and (2) subjecting the photopolymerisable resin or each layer of the solid substantially polymerised resin composition to a programmed beam of infrared light thereby effecting colour development or colour change in one or more zones in the article.
JP 2004249544 describes a sticky sheeting that has a reversible multi-color recording layer formed on one main surface of a support and the other main surface serving as a surface for forming a grabbing layer. The reversible multi-color recording layer is of such a structure that microvoid structures in which each of two or more reversible heat-sensitive color developing compositions for differently developed color tones is sealed, are separately and independently formed. The reversible heat-sensitive color developing compositions contain a photothermal conversion material which absorbs infrared lights of respectively different wavelength ranges and generates heat.
JP 2006088645 describes a reversible thermal recording medium that has reversible thermal recording layers containing in a resin a thermal color developing compositions which can reversibly change in two ways, i.e. colorless and colored, depending on temperature variations, formed in a planar direction of a supporting substrate. In this medium, a leuco dye compound added to the thermal color developing composition is specified with regard to its chemical formula.
WO 2016/152088 describes providing a thermoreversible recording medium including a support, and a thermoreversible recording layer, which is disposed on the support, and contains a leuco dye, and a reversible color developer, wherein an average particle diameter of granules in the thermoreversible recording layer is 0.35 micrometers or smaller.

### Summary of the Invention

Incidentally, in a three-dimensional structure manufactured with use of a 3D printer or the like, it is difficult to selectively color a desired portion such as a surface, an interior, or the entirety of the three-dimensional structure, and it is desired to improve designability.

It is desirable to provide a three-dimensional structure and a method of manufacturing a three-dimensional structure that make it possible to improve designability.
Aspects of the invention are set out in the claims, wherein the method according to the invention is defined in claim 1.

It is to be noted that effects described here are not necessarily limitative, and may be any of effects described in the present disclosure.

### Brief Description of Drawings

[FIG. 1] FIG. 1 is a schematic cross-sectional view of a portion of a configuration of a three-dimensional structure according to a first embodiment of the present disclosure.
[FIG. 2] FIG. 2 is an overall view of the three-dimensional structure illustrated in FIG. 1.
[FIG. 3] FIG. 3 is a schematic view of a portion of a process in an example of a method of manufacturing the three-dimensional structure illustrated in FIG. 1.
[FIG. 4] FIG. 4 is a schematic view of a portion of a process in another example of the method of manufacturing the three-dimensional structure illustrated in FIG. 1.
[FIG. 5] FIG. 5 is a schematic cross-sectional view of a portion of a configuration of a three-dimensional structure according to a second embodiment of the present disclosure.
[FIG. 6] FIG. 6 is a schematic cross-sectional view of a portion of a configuration of a three-dimensional structure according to a third embodiment of the present disclosure.
[FIG. 7] FIG. 7 is a perspective view of an appearance of an application example. Modes for Carrying Out the Invention

Some embodiments of the present disclosure are described below in detail with reference to the drawings. It is to be noted that the following description is given of specific examples of the present disclosure, and the present disclosure is not limited to the following embodiments. Description is given in the following order.
1. First Embodiment (a three-dimensional structure including stacked resin layers that include leuco dyes exhibiting different colors for respective layers)
   1-1. Configuration of Three-dimensional Structure
   1-2. Method of Manufacturing Three-dimensional Structure
   1-3. Workings and Effects
2. Second Embodiment (a three-dimensional structure additionally including a resin layer exhibiting a white color)
   2-1. Configuration of Three-dimensional Structure
   2-2. Workings and Effects
3. Third Embodiment (a three-dimensional structure including stacked resin layers in which leuco dyes encapsulated in microcapsules are dispersed)
   3-1. Configuration of Three-dimensional Structure
   3-2. Workings and Effects
4. Application Examples

### <1. First Embodiment>

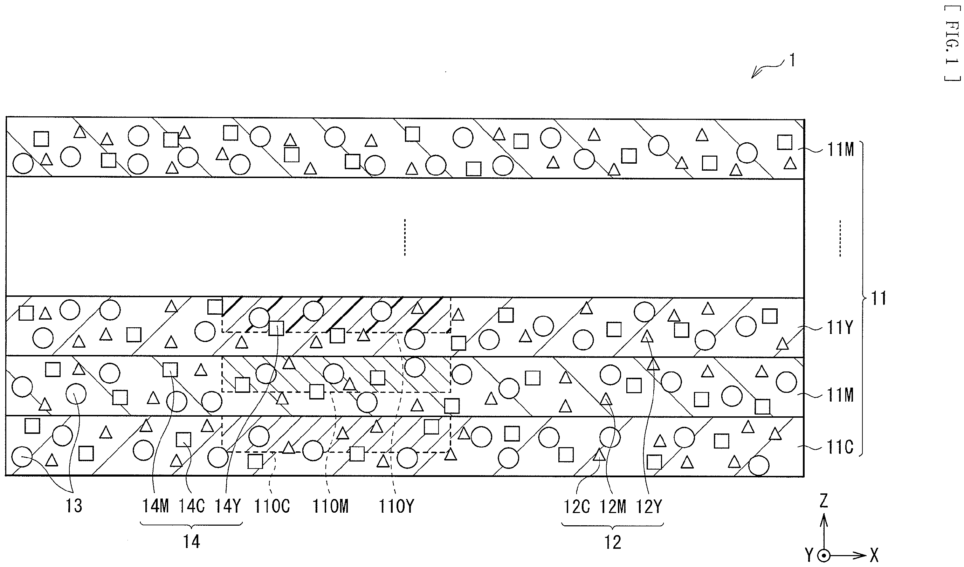

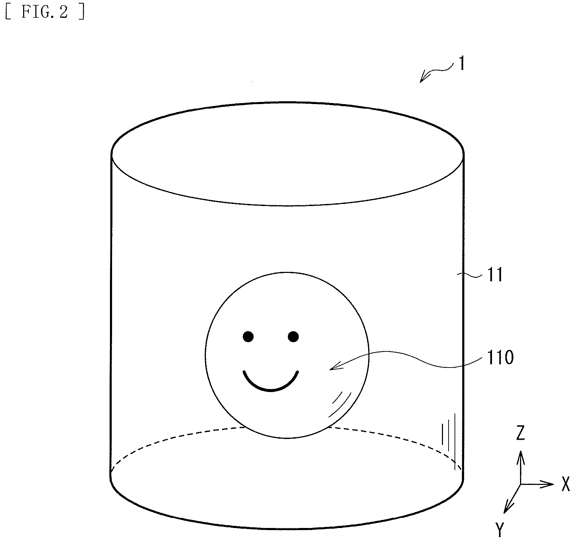

FIG. 1 schematically illustrates a cross-sectional configuration of a portion of a three-dimensional structure (a three-dimensional structure 1) according to a first embodiment of the present disclosure. FIG. 2 illustrates the entirety of the three-dimensional structure 1 illustrated in FIG. 1. The three-dimensional structure 1 is an object obtained by a 3D printer, for example, and includes, for example, resin layers that are stacked in order on a light curable resin. The resin layers are cured by irradiation with light. In the three-dimensional structure 1 according to the present embodiment, a plurality of resin layers 11 including a leuco dye 12 (a coloring compound), a color developing-reducing agent 13, and a photothermal conversion agent 14 are stacked, and as illustrated in FIG. 2, for example, a drawing section 110 is formed in, for example, an interior of a transparent resin layer 11. It is to be noted that FIG. 1 schematically illustrates a cross-sectional configuration of a portion of the three-dimensional structure 1, of which dimensions and shapes may be different from actual dimensions and actual shapes.

### (1-1. Configuration of Three-dimensional Structure)

The three-dimensional structure 1 according to the present embodiment includes the plurality of resin layers 11 that are stacked. The resin layers 11 include, for example, a plurality of types of layers exhibiting colors different from each other. Specifically, the resin layers 11 according to the present embodiment include a resin layer 11C exhibiting cyan (C), a resin layer 11M exhibiting magenta (M), and a resin layer 11Y exhibiting yellow (Y). This allows for full-color coloring. Each of the resin layers 11C, 11M, and 11Y includes a coloring compound exhibiting a corresponding color (a leuco dye 12C, 12M, or 12Y), the color developing-reducing agent 13, and a photothermal conversion agent 14C, 14M, or 14Y. The photothermal conversion agents 14C, 14M, and 14Y have absorption wavelengths different from each other.

The resin layers 11 preferably include a resin in which the leuco dye 12, the color developing-reducing agent 13, and the photothermal conversion agent 14 are easily and uniformly dispersed and that has light transparency. In addition, the resin layers 11 are cured by irradiation with light (e.g., a laser), and uses a light curable resin. Among the light curable resins, it is desirable to use an ultraviolet curable resin that is cured by irradiation with ultraviolet light that has high energy density and is possible to narrow a laser spot diameter. Thus, a highly accurate shaped object is obtainable.

As described above, in the resin layers 11, for example, the resin layer 11C exhibiting cyan, the resin layer 11M exhibiting magenta, and the resin layer 11Y exhibiting yellow are repeatedly stacked in this order. Thicknesses of the respective resin layers 11C, 11M, and 11Y are preferably, for example, less than or equal to a limit of human visibility, and is preferably, for example, greater than or equal to 10 µm and less than or equal to 50 µm. In particular, a thickness at which coloring is induced by laser irradiation is preferably, for example, greater than or equal to 1 µm and less than or equal to 10 µm. This makes it possible to prevent coloring in colors other than a desired color.

The leuco dye 12 (12C, 12M, and 12Y) is colored, for example, in a case where a lactone ring included in a molecule reacts with, for example, an acid to be turned to an open ring form, and becomes colorless in a case where the lactone ring in the open ring form reacts with, for example, a base to be turned to a closed ring form. One specific example of the leuco dye 12 is a compound that includes an electron-donating group in a molecule and is represented by the following formula (1). The leuco dye 12 corresponds to a specific example of a "coloring compound" in the present disclosure.

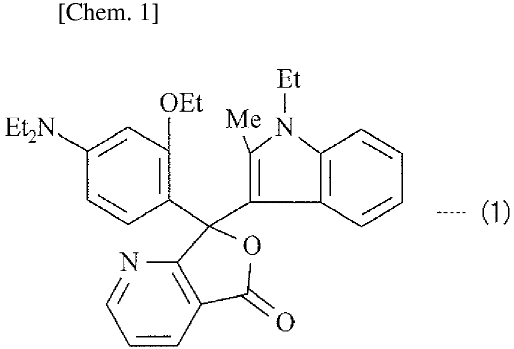

For example, the color developing-reducing agent 13 causes the colorless leuco dyes 12C, 12M, and 12Y to be colored or causes the leuco dyes 12C, 12M, and 12Y exhibiting a predetermined color to become colorless. An example of the color developing-reducing agent 13 is a compound that has a salicylic acid skeleton represented by the following general formula (2) and includes an electron-accepting group in a molecule. It is to be noted that different color developing-reducing agents 13 may be used for respective resin layers 11C, 11M, and 11Y, or the same color developing-reducing agent 13 may be used. 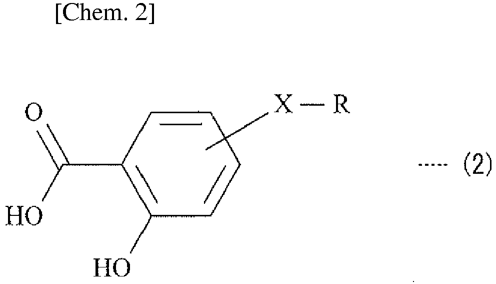 (where X is any of -NHCO-, -CONH-, -NHCONH-, -CONHCO-, -NHNHCO-, -CONHNH-, -CONHNHCO-, -NHCOCONH-, -NHCONHCO-, -CONHCONH-, -NHNHCONH-, -NHCONHNH-, -CONHNHCONH-, -NHCONHNHCO-, and -CONHNHCONH-, and R is a straight-chain hydrocarbon group having a carbon number of 25 to 34.)

The photothermal conversion agent 14 (14C, 14M, and 14Y) absorbs, for example, light in a predetermined wavelength range of a near-infrared region to generate heat. As the photothermal conversion agent 14, for example, it is preferable to use a near-infrared absorbing dye having an absorption peak in a wavelength range from 700 nm to 2000 nm both inclusive and hardly having absorption in a visible region.

Specific examples thereof include a compound having a phthalocyanine skeleton (phthalocyanine-based dye), a compound having a squarylium skeleton (squarylium-based dye), inorganic compounds, and the like, for example. The inorganic compounds include a metal complex such as a dithio complex, a diimonium salt, an aminium salt, an inorganic compound, and the like. Examples of the inorganic compounds include graphite, carbon black, metal powder particles, tricobalt tetraoxide, iron oxide, chromium oxide, copper oxide, titanium black, metal oxides such as ITO, metal nitrides such as niobium nitride, metal carbides such as tantalum carbide, metal sulfides, and various magnetic powders. Alternatively, a compound that has superior light resistance and superior heat resistance and has a cyanine skeleton (a cyanine-based dye) may be used. In the present embodiment, three kinds of photothermal conversion agents 14C, 14M, and 14Y are used, and desirably absorb light in wavelength ranges different from each other to generate heat.

It is to be noted that the superior light resistance herein means not causing decomposition during laser irradiation. The superior heat resistance means not changing a maximum absorption peak value of an absorption spectrum by 20% or more, for example, in a case where a film is formed together with a polymer material and stored at 150°C for 30 minutes. Examples of such a compound having the cyanine skeleton include a compound having, in a molecule, at least one of a counter ion of any of SbF₆, PF₆, BF₄, ClO₄, CF₃SO₃, and (CF₃SO₃)₂N or a methine chain including a five-membered ring or a six-membered ring. It is to be noted that the compound having the cyanine skeleton used in the three-dimensional structure according to the present embodiment preferably include both any of the counter ions described above, and a cyclic structure such as the five-membered ring and the six-membered ring in a methine chain, but if the compound having the cyanine skeleton includes at least one of any of the counter ions or the cyclic structure, sufficient light resistance and sufficient heat resistance are secured.

The resin layers 11 (11C, 11M, and 11Y) each include at least one kind of the leuco dye 12 (12C, 12M, or 12Y), at least one kind of the color developing-reducing agents 13, and at least one kind of the photothermal conversion agent 14 (14C, 14M, or 14Y). The leuco dye 12 (12C, 12M, and 12Y) and the color developing-reducing agent 13 is preferably included in the resin layers 11 at a ratio of the leuco dye : the color developing-reducing agent = 1:2 (in weight ratio). The photothermal conversion agent 14 varies depending on film thicknesses of the resin layers 11. Further, in addition to the above-described materials, the resin layers 11 may include various additives such as a sensitizer and an ultraviolet absorber.

It is to be noted that, although not illustrated, it is preferable to form, for example, a protective layer on the surface of the three-dimensional structure 1. The protective layer protects surfaces of the resin layers 11, and is formed with use of, for example, an ultraviolet curable resin or a thermosetting resin. A thickness of the protective layer is, for example, greater than or equal to 0.1 µm and less than or equal to 20 µm.

Further, for example, a heat insulating layer may be provided between the resin layers 11C, 11M, and 11Y. This makes it possible to easily prevent coloring of the resin layers 11 other than the desired resin layer 11. Examples of a material of the heat insulating layer include a polymer material included in microcapsules 20C, 20M, and 20Y to be described later. Alternatively, an inorganic material having light transparency may be used. For example, porous silica, alumina, titania, carbon nanotubes, a composite thereof, or the like is preferably used, which decreases thermal conductivity, resulting in a high thermal insulating effect.

### (1-2. Method of Manufacturing Three-dimensional structure)

According to the claimed invention, the three-dimensional structure is manufactured with use of a 3D printer, and the three-dimensional structure 1 is manufactured with use of, for example, the following method.

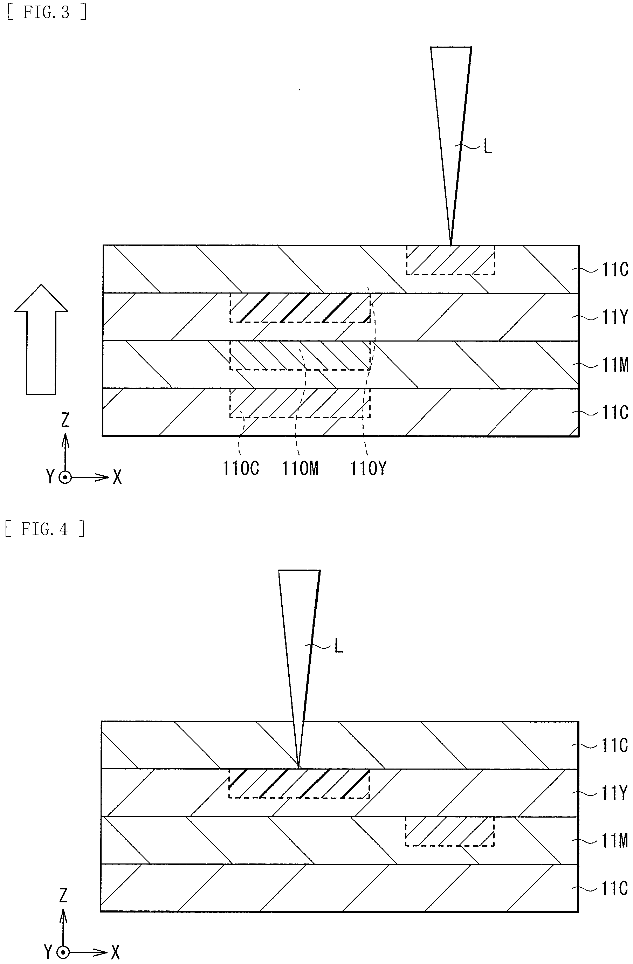

FIG. 3 schematically illustrates a portion of a process in an example of a method of manufacturing the three-dimensional structure 1. First, the leuco dye 12C, the color developing-reducing agent 13, and the photothermal conversion agent 14C are added to a liquid ultraviolet curable resin, and then are dispersed or dissolved in the liquid ultraviolet curable resin to obtain a paint C for the resin layer 11C. A paint M for the resin layer 11M and a paint Y for the resin layer 11Y are prepared in a similar manner. Subsequently, the paint C, the paint M, and the paint Y are applied onto a base material, and cured in this order to form and stack the resin layer 11C, the resin layer 11M, and the resin layer 11Y in this order.

Specifically, for example, the paint C is applied, for example, with a thickness of 50 µm onto the base material, and the paint C is cured by irradiation with ultraviolet light to form the resin layer 11C. At this time, a coloring region 110C having a thickness of, for example, 10 µm is formed at a desired position by irradiation with a laser L having a wavelength of, for example, 900 nm to 1000 nm simultaneously with irradiation with ultraviolet light. Performing irradiation with ultraviolet light and irradiation with the laser L having a predetermined wavelength in the same process in such a manner makes it possible to easily color an interior of the three-dimensional structure 1. Thereafter, the resin layers 11M and 11Y are formed similarly to the resin layer 11C. Specifically, for example, the paint M is applied with a thickness of, for example, 50 µm onto the resin layer 11C, and then the paint M is cured and a coloring region 110M is formed by irradiation with ultraviolet light and the laser L having a wavelength of, for example, 800 nm to 900 nm. Subsequently, for example, the paint Y is applied with a thickness of, for example, 50 µm onto the resin layer 11M, and then the paint Y is cured and a coloring region 110Y is formed by irradiation with ultraviolet light and the laser L having a wavelength of, for example, 700 nm to 800 nm. Thereafter, for example, the resin layer 11C, the resin layer 11M, and the resin layer 11Y are formed and stacked in order to form the three-dimensional structure 1 having a desired shape.

Thicknesses of the coloring regions 110C, 110M, and 110Y vary depending on intensity, a focal position, and irradiation time of the laser L. In addition, the coloring regions 110C, 110M, and 110Y are preferably formed in proximity to surfaces of the respective resin layers 11C, 11M, and 11Y. That is, the laser L with which each of the resin layers 11C, 11M, and 11Y is irradiated is preferably focused on proximity to the surface of each of the resin layers 11C, 11M, and 11Y during film formation, and the focal position of the laser L is preferably shifted in an arrow direction (a stacking direction). This makes it possible to reduce coloring of the resin layer 11 formed below and color only the desired resin layer 11.

In addition, a method other than the above-described method may be used for drawing (coloring) in the three-dimensional structure 1. FIG. 4 schematically illustrates a portion (a drawing process) of a process in an example of the method of manufacturing the three-dimensional structure illustrated in FIG. 1. In this method, the resin layer 11C, the resin layer 11M, and the resin layer 11Y are formed and stacked in order to form the three-dimensional structure 1 having a desired shape, and thereafter, desired positions in the resin layer 11C, the resin layer 11M, and the resin layer 11Y are colored. Specifically, for example, as illustrated in FIG. 4, focusing the laser L on a position where a drawing is desired to be made makes it possible to make a drawing in the interior of the three-dimensional structure 1.

It is to be noted that FIG. 4 illustrates an example in which irradiation with the laser L is performed from the stacking direction, but the direction where irradiation with the laser L is performed is not limited thereto. For example, irradiation with the laser L may be performed from a plane direction (for example, an X-axis direction or a Y-axis direction) of the resin layers 11C, 11M, and 11Y.

In addition, it is possible for the leuco dye 12 to become colorless by being heated to a predetermined temperature. Using this heating process and a drawing method illustrated in FIG. 4 in combination makes it possible to renew the drawing made in the three-dimensional structure 1.

### (1-3. Workings and Effects)

As described above, in recent years, as technology for manufacturing a three-dimensional object having an optional three-dimensional shape, additive manufacturing technology for solidifying a fluid material on the basis of three-dimensional data has been developed. This technology is generally known as 3D printer, and, for example, resin layers (cured layers) formed by curing a light curable resin by irradiation with light are formed in order, thus making it possible to from an object having a desired shape. In a three-dimensional structure manufactured with use of a 3D printer or the like, it is however difficult to selectively color a desired portion such as a surface, an interior, or the entirety of the three-dimensional structure, and designability is insufficient.

As a method of coloring a three-dimensional object, for example, it is conceivable to interpose an ink or a pigment in the middle of forming cured layers in order, but it is difficult to color a specific portion. In addition, in this method, it is difficult to restore the portion once the portion is colored.

In contrast, in the three-dimensional structure 1 according to the present embodiment, the leuco dye 12, the color developing-reducing agent 13, and the photothermal conversion agent 14 are dispersed in the light curable resin, which makes it possible to selectively color an irradiated portion by irradiation with a laser having a predetermined wavelength.

As described above, in the three-dimensional structure 1 according to the present embodiment, the resin layers 11 are formed with use of the leuco dye 12, the color developing-reducing agent 13, and the photothermal conversion agent 14 together with the light curable resin, which makes it possible to selectively color a desired portion by irradiation with a laser having a predetermined wavelength. That is, it is possible to color not only the surface but also the interior or the entirety of the three-dimensional structure 1, thus allowing for an improvement in designability of the three-dimensional structure 1.

In addition, the leuco dye 12 is allowed to reversibly switch between two states, i.e., a colored state and a colorless state. This makes it possible to renew the drawing (coloring) made in the three-dimensional structure 1 in the present embodiment.

Further, in the present embodiment, three kinds of leuco dyes 12C, 12M, and 12Y exhibiting cyan, magenta, and yellow are used as the leuco dye 12, and three kinds of photothermal conversion agents 14C, 14M, and 14Y having absorption wavelengths different from each other are used corresponding to the three kinds of leuco dyes 12C, 12M, and 12Y. This allows for full-color coloring, and allows for a further improvement in designability.

Next, description is given of second and third embodiments of the present disclosure. Hereinafter, components similar to those of the foregoing first embodiment are denoted by same reference numerals, and description thereof is omitted as appropriate.

### <2. Second embodiment>

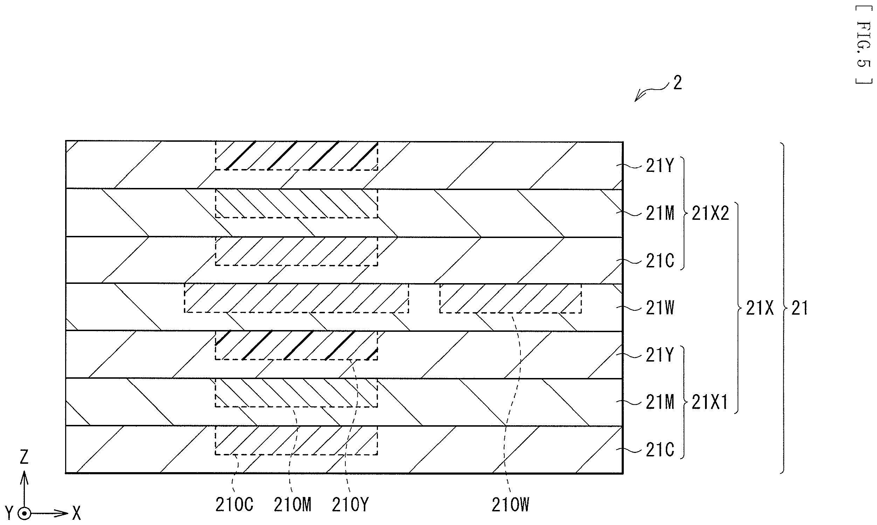

FIG. 5 schematically illustrates a cross-sectional configuration of a portion of a three-dimensional structure (a three-dimensional structure 2) according to the second embodiment of the present disclosure. The three-dimensional structure 2 is an object obtained by a 3D printer, for example, similarly to the three-dimensional structure 1 described above, and includes, for example, resin layers that are stacked in order. The resin layers are formed by curing a light curable resin by irradiation with light. In the three-dimensional structure 2 according to the present embodiment, a white resin layer 21W exhibiting white is added to resin layers 21C, 21M, and 21Y that are repeatedly stacked. It is to be noted that FIG. 5 schematically illustrates a cross-sectional configuration of a portion of the three-dimensional structure 2, of which dimensions and shapes may be different from actual dimensions and actual shapes.

### (2-1. Configuration of Three-dimensional Structure)

The three-dimensional structure 2 according to the present embodiment includes a plurality of resin layers 21 that are stacked. The resin layers 21 includes the resin layer 21C exhibiting cyan, the resin layer 21M exhibiting magenta, the resin layer 21Y exhibiting yellow, and the resin layer 21W exhibiting white.

The resin layer 21W exhibits white or a color close to white in the colored state. The resin layer 21W preferably has an optical reflectance of, for example, 30% or more while exhibiting white, and it is therefore possible to use the resin layer 21W as a reflective layer. The resin layer 21W is preferably provided between a plurality of stacked colored layers 21X as groups of the resin layers 21C, 21M, and 21Y. Specifically, for example, as illustrated in FIG. 5, the resin layer 21W is preferably provided between colored layers 21X1 and 21X2. As a result, while the colored layers 21X1 and 21X2 are colored, the resin layer 21W is colored to thereby serve as the reflective layer. This improves a coloring property of the resin layer 21W. In addition, coloring the resin layer 21W alone also allows for white representation.

It is to be noted that in a case where the resin layer 21W is colored as the reflective layer, as illustrated in FIG. 5, a coloring region 210W is preferably formed to be larger than coloring regions 210C, 210M, and 210Y of the colored layer 21X. This makes it possible to improve visibility in a case where the three-dimensional structure 2 is viewed from a horizontal direction (a plane direction of the respective resin layers 21, an X-Y plane direction in FIG. 5), similarly to a case where the three-dimensional structure 2 is viewed from a vertical direction (the stacking direction of the respective resin layers 21, the Y-axis direction in FIG. 5).

As a material of the resin layer 21W, for example, an organic low molecular weight compound having a molecular weight of 150 or more and 700 or less is preferably used, and examples thereof include long-chain low molecular weight compounds such as fatty acids. Specific examples thereof include behenic acid, lignoseric acid, eicosanedioic acid, and the like. Among these compounds, it is desirable to use a combination of a higher fatty acid having a low melting point (for example, behenic acid) and a dibasic acid having a high melting point (for example, eicosanedioic acid). Using a combination of long-chain low molecular weight compounds having different melting points makes it possible to increase a transparency temperature range and improve erasing speed. The above-described materials are used as coloring compounds in the resin layer 21W, and these materials and the photothermal conversion agent 14 described in the first embodiment are dispersed in the light curable resin, which makes it possible to form the resin layer 21W exhibiting white by irradiation with a laser having a predetermined wavelength.

### (2-2. Workings and Effects)

As described above, in the three-dimensional structure 2 according to the present embodiment, a resin layer 31W exhibiting white is provided between a plurality of stacked colored layers 31X as groups of the resin layers 21C, 21M, and 21Y exhibiting chromatic colors (for example, cyan white (C), magenta (M), and yellow (Y)) that are stacked. The resin layer 31W is colored together with the colored layers 31X to thereby serve as an emission layer, which makes it possible to improve a coloring property of the colored layer 31X. In addition, coloring the resin layer 31W alone allows for white representation. This makes it possible to enlarge a colorable color gamut with respect a three-dimensional structure 3, to in addition to the effects of the foregoing first embodiment.

### <3. Third Embodiment>

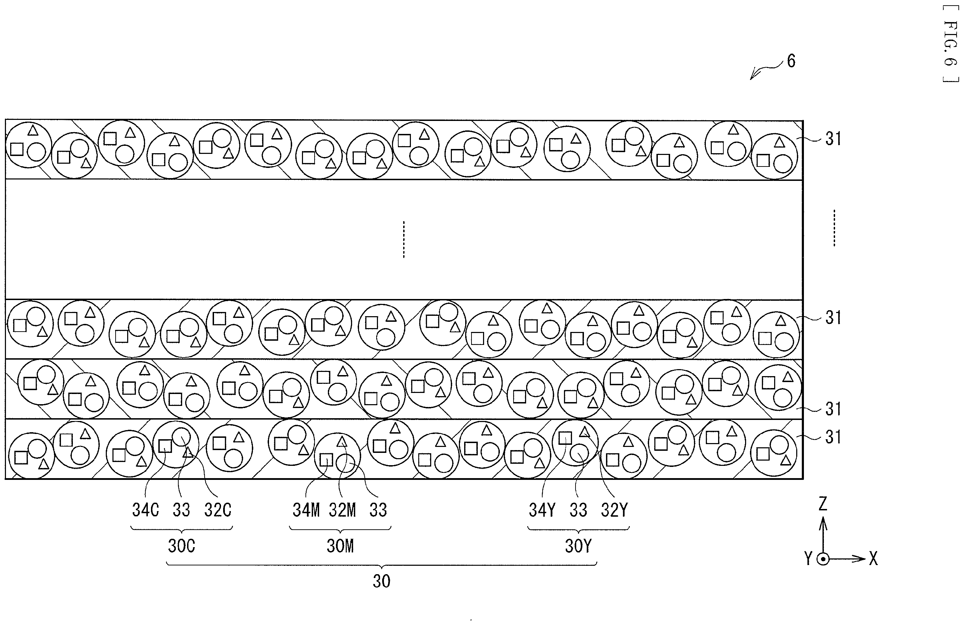

FIG. 6 schematically illustrates a cross-sectional configuration of a portion of a three-dimensional structure (the three-dimensional structure 3) according to the third embodiment of the present disclosure. The three-dimensional structure 3 is an object obtained by a 3D printer, for example, similarly to the three-dimensional structures 1 and 2 described above, and includes, for example, cured layers that are stacked in order. The cured layers are formed by curing a light curable resin by irradiation with light. In the three-dimensional structure 3 according to the present embodiment, three kinds of microcapsules 30C, 30M, and 30Y in which leuco dyes 32C, 32M, and 32Y exhibiting different colors (for example, cyan (C), magenta (M), and yellow (Y)) are respectively encapsulated are prepared, and a plurality of resin layers 31 including the three kinds of microcapsules 30C, 30M, and 30Y are stacked. FIG. 6 schematically illustrates a cross-sectional configuration of a portion of the three-dimensional structure 3, of which dimensions and shapes may be different from actual dimensions and actual shapes.

### (3-1. Configuration of Three-dimensional Structure)

The three-dimensional structure 3 according to the present embodiment includes a plurality of resin layers 31 that are stacked. In the resin layers 31, three kinds of microcapsules 30C, 30M, and 30Y are dispersed as described above. In addition to the leuco dyes 32C, 32M, and 32Y, a color developing-reducing agent 33 is encapsulated in each of the microcapsules 30C, 30M, and 30Y, and three kinds of photothermal conversion agents 34C, 34M, and 34Y having absorption wavelengths different from each other are respectively encapsulated in the microcapsules 30C, 30M, and 30Y.

The microcapsules 30C, 30M, and 30Y is formed with use of, for example, a polymer material having a heat insulating property and light transparency. Examples of such a material include polyvinyl chloride, polyvinyl acetate, vinyl chloride-vinyl acetate copolymer, ethylcellulose, polystyrene, styrenic copolymer, phenoxy resin, polyester, aromatic polyester, polyurethane, polycarbonate, polyacrylic acid ester, polymethacrylic acid ester, acrylic acid copolymer, maleic acid polymer, polyvinyl alcohol, modified polyvinyl alcohol, hydroxyethylcellulose, carboxymethylcellulose, starch, and the like, and copolymers thereof.

It is to be noted that the microcapsules 30C, 30M, and 30Y may include various additives such as an ultraviolet absorber, for example. Alternatively, in addition to the leuco dyes 32C, 32M, and 32Y, the additives described above may be encapsulated in the microcapsules 30C, 30M, and 30Y together with the color developing-reducing agent 33 and three kinds of photothermal conversion agents 34C, 34M, and 34Y having absorption wavelengths different from each other.

### (3-2. Workings and Effects)

As described above, in the three-dimensional structure 3 according to the present embodiment, the microcapsules 30C, 30M, and 30Y each containing one type of leuco dyes 32C, 32M, and 32Y, the color developing-reducing agent 33, and one kind of photothermal conversion agents 34C, 34M, and 34Y having absorption wavelength different from each other are formed, and dispersed in the light curable resin. This makes it possible to form the three-dimensional structure 3 with use of one kind of paint, for example, as compared with the first embodiment in which three kinds of paints (the paint C, the paint M, and the paint Y) each including corresponding materials are prepared, and, for example, the paint C, the paint M, and the paint Y are applied and cured in this order, and stacked in order. Accordingly, an effect of simplifying manufacturing processes is achieved together with effects similar to those in the first embodiment.

In addition, in the present embodiment, microcapsules 30W (not illustrated) using the material of resin layer 21W described in the second embodiment are formed as the microcapsules 30, and are used together with the microcapsules 30C, 30M, and 30Y, which makes it possible to achieve effects similar to those in the second embodiment.

### <4. Application Examples>

Next, description is given of application examples of the three-dimensional structure (for example, the three-dimensional structure 1) described in the foregoing first to third embodiments. However, a configuration described below is merely an example, and the configuration can be changed as appropriate.

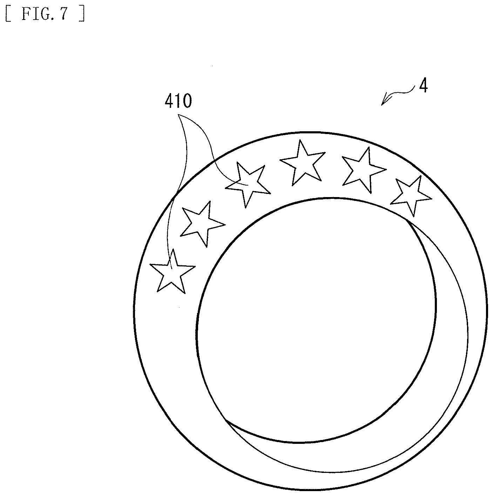

FIG. 7 illustrates an appearance of a bungle as an example of a three-dimensional structure 4. This bungle 4 has, for example, a colored star shape 410 in an interior thereof. The three-dimensional structures 1 to 3 described above are applicable to a portion of any of clothing ornaments and various electronic apparatuses in such a manner. Examples of the clothing ornaments and the electronic apparatuses include clocks (watches) as so-called wearable terminals, portions of clothing ornaments such as bags, clothing, headwear, spectacles, and footwear, and ornaments such as figurines, and kinds thereof are not particularly limited.

Although the present disclosure has been described with reference to the first to third embodiments and the application examples, the present disclosure is not limited to modes described in the foregoing embodiments and the like, and may be modified in a variety of ways. For example, it is not necessary to include all the components described in the foregoing first to third embodiments, and any other component may be further included. In addition, the materials and thicknesses of the components described above are merely illustrative, and are not limited to those described above.

For example, the leuco dyes 12C, 12M, and 12Y used for the resin layers (for example, the resin layers 11C, 11M, and 11Y) exhibiting respective colors (cyan (C), magenta (M), and yellow (Y)) may use a mixture of a plurality of kinds of materials exhibiting colors different from each other. It is difficult to reproduce CMY (cyan, magenta, and yellow) of Japan Color with use of a single coloring compound (a leuco dye). In addition, the photothermal conversion agent has a slight tint, which causes the tint of each resin layer to change slightly depending on the kind and content of the photothermal conversion agent. Developing the leuco dye for each slight change significantly reduces production efficiency. Accordingly, it is possible to reproduce various colors including CMY of Japan Color by forming a mixture of a plurality of kinds of leuco dyes. For example, it is possible to reproduce cyan by mixing a leuco dye exhibiting blue and a leuco dye exhibiting green at a predetermined ratio. It is possible to reproduce magenta by mixing a leuco dye exhibiting red and a leuco dye exhibiting orange at a predetermined ratio.

It is to be noted that effects described in this specification are merely illustrative and non-limiting, and other effects may be included.

This application claims the benefit of Japanese Priority Patent Application JP2017-099627 filed with the Japan Patent Office on May 19, 2017.

## Claims

1. A method of manufacturing a three-dimensional structure with an additive manufacturing technology (1) comprising:
forming a film including a light curable resin as a resin layer (11), the light curable resin including a coloring compound (12), a color developing-reducing agent (13), and a photothermal conversion agent (14);
stacking a plurality of the resin layers; and
wherein the colouring compound comprises a leuco dye.

2. The method of manufacturing the three-dimensional structure (1) according to claim 1, wherein the light curable resin is irradiated with ultraviolet light to form the resin layer (11).

3. The method of manufacturing the three-dimensional structure (1) according to claim 2, wherein a predetermined portion (110) of the resin layer (11) is colored by irradiation with a laser having a predetermined wavelength together with the ultraviolet light.

4. The method of manufacturing the three-dimensional structure (1) according to claim 2, wherein the light curable resin is irradiated with ultraviolet light to form the resin layer (11C, 11M, 11Y), and the plurality of the resin layers is stacked, and thereafter, a predetermined portion (110C, 110M, 110Y) of the plurality of the resin layers stacked is colored by irradiation with a laser (L) having a predetermined wavelength.

## Patentansprüche

1. Verfahren zum Herstellen einer dreidimensionalen Struktur (1) mit einer additiven Herstellungstechnologie, umfassend:
Bilden eines Films, der ein lichtaushärtbares Harz als eine Harzschicht (11) beinhaltet, wobei das lichtaushärtbare Harz eine Einfärbeverbindung (12), ein farbentwicklungsreduzierendes Agens (13) und ein photothermisches Umwandlungsagens (14) beinhaltet;
Stapeln einer Vielzahl der Harzschichten; und
wobei die Einfärbeverbindung einen Leukofarbstoff umfasst.

2. Verfahren zum Herstellen der dreidimensionalen Struktur (1) nach Anspruch 1, wobei das lichtaushärtbare Harz mit Ultraviolettlicht bestrahlt wird, um die Harzschicht (11) zu bilden.

3. Verfahren zum Herstellen der dreidimensionalen Struktur (1) nach Anspruch 2, wobei ein vorbestimmter Anteil (110) der Harzschicht (11) durch Bestrahlung mit einem Laser, der eine vorbestimmte Wellenlänge aufweist, zusammen mit dem Ultraviolettlicht eingefärbt wird.

4. Verfahren zum Herstellen der dreidimensionalen Struktur (1) nach Anspruch 2, wobei das lichtaushärtbare Harz mit Ultraviolettlicht bestrahlt wird, um die Harzschicht (11C, 11M, 11Y) zu bilden, und die Vielzahl der Harzschichten gestapelt wird, und danach ein vorbestimmter Anteil (110C, 110M, 110Y) aus der Vielzahl der gestapelten Harzschichten durch Bestrahlung mit einem Laser (L), der eine vorbestimmte Wellenlänge aufweist, eingefärbt wird.

## Revendications

1. Procédé de fabrication d'une structure tridimensionnelle avec une technologie de fabrication additive (1) comprenant :
la formation d'un film comprenant une résine photopolymérisable en tant que couche de résine (11), la résine photopolymérisable comprenant un composé colorant (12), un agent de révélation et de réduction de couleur (13), et un agent de conversion photothermique (14) ;
l'empilement d'une pluralité des couches de résine ; et
dans lequel le composé colorant comprend un leucocolorant.

2. Procédé de fabrication de la structure tridimensionnelle (1) selon la revendication 1, dans lequel la résine photopolymérisable est exposée à une lumière ultraviolette pour former la couche de résine (11) .

3. Procédé de fabrication de la structure tridimensionnelle (1) selon la revendication 2, dans lequel une partie prédéterminée (110) de la couche de résine (11) est colorée par exposition à un laser ayant une longueur d'onde prédéterminée conjointement avec la lumière ultraviolette.

4. Procédé de fabrication de la structure tridimensionnelle (1) selon la revendication 2, dans lequel la résine photopolymérisable est exposée à une lumière ultraviolette pour former la couche de résine (11C, 11M, 11Y), et la pluralité des couches de résine est empilée, et après cela, une partie prédéterminée (110C, 110M, 110Y) de la pluralité des couches de résine empilées est colorée par exposition à un laser (L) ayant une longueur d'onde prédéterminée.
